# FASCICULE DE BREVET EUROPEEN

(11) **EP 2 003 084 B1**
(45) Date de publication et mention de la délivrance du brevet: **16.06.2010**
(21) Numéro de dépôt: 08380128.2
(22) Date de dépôt: 30.04.2008
(51) Int. Cl.: B66C 13/44, B66D 1/46, G08C 17/02, H01H 13/50

(54) **Émetteur de télécommande**
Fernsteuerungsemitter
Remote control emitter

(30) Priorité: 01.06.2007 ES 200701509
(43) Date de publication de la demande: 17.12.2008
(73) Titulaire: Angel Iglesias S.A., 20009 San Sebastian (ES)
(72) Inventeur: Rodriguez Navarrete, Luis, 20009 San Sebastian (Gipuzkoa) (ES)
(74) Mandataire: Carpintero Lopez, Francisco

(56) Documents cités:
- EP-A- 1 748 399
- EP-A- 1 927 568
- WO-A-2006/131862
- WO-A-2008/064381
- CH-A- 473 510

## Description

Les émetteurs de télécommande des machines de levage doivent respecter la Directive Machine en ce qui concerne le circuit d'arrêt.

La Norme harmonisée EN954-1 définit, en ce qui concerne la sécurité, une "fonction de contrôle" comme catégorie 3 à son paragraphe 6.2.4.

WO 2006/131862 décrit un émetteur de télécommande qui se compose de deux contacts normalement ouverts.

La "fonction de contrôle" qui est envisagée est la "fonction d'arrêt" de la machine télécommandée.

En bref, la fonction d'arrêt d'une télécommande peut être considérée catégorie 3 en ce qui concerne sa sécurité, si :
a) La machine télécommandée étant en marche, s'il y a une panne électrique dans le circuit d'arrêt, celle-ci peut être arrêtée avec un bouton d'arrêt.
b) Une fois que la machine est arrêtée, il n'est plus possible de la remettre en marche tant que persiste la panne dans le circuit.

La présente invention a trait à un émetteur ayant un bouton d'arrêt et un circuit d'arrêt dans l'émetteur de télécommande, qui permet d'atteindre la catégorie 3 en utilisant un bouton qui comporte un double circuit, à contacts normalement ouverts, réalisable avec un clavier à membrane.

Dans l'invention selon la revendication 1, le bouton d'arrêt reçoit un commun d'alimentation et génère trois signaux pour le circuit d'arrêt, de telle façon qu'une panne de l'un quelconque d'entre eux continue d'assurer un arrêt sûr.

+ VBAT: Entrée d'alimentation, qui constitue le commun du bouton d'arrêt.

ST1: Contact normalement ouvert, qui se ferme quand on presse le bouton d'arrêt, à la suite d'une demande d'arrêt de la machine contrôlée.

ST2: Contact normalement ouvert, qui se ferme quand on presse le bouton d'arrêt, à la suite d'une demande d'arrêt de la machine contrôlée.

KBP: Contact fermé en permanence. Son ouverture accidentelle indique l'absence du bouton d'arrêt, ce qui sera interprété comme une demande d'arrêt de la machine contrôlée.

Le circuit d'arrêt dans l'invention a été implémenté au moyen d'une stratégie combinée émetteur-récepteur :

L'émetteur a une double fonction pour ordonner l'arrêt du récepteur :
a) ordre actif moyennant l'envoi d'un ordre encodé par le microprocesseur de l'émetteur et transmis par les moyens habituels (par exemple, la radio) au récepteur. Le temps de réponse type est de 150ms.
b) ordre passif d'arrêt : moyennant la suspension de la communication. Le récepteur doit recevoir en permanence des signaux encodés valables à partir de l'émetteur. L'arrêt de cette liaison détermine dans le récepteur l'arrêt de la machine. La durée maximale d'absence de signal est définie dans la Norme EN 13557:2003, à son paragraphe C.3.2, comme étant comprise entre 0,5 et 2 s.

Le circuit d'arrêt est le responsable du comportement sûr du transmetteur en ce qui concerne la fonction d'arrêt de la machine contrôlée. La première fois qu'on le presse, s'il n'y a pas de pannes présentes, il détermine la mise en marche de la source d'alimentation, en mémorisant l'état d'allumage dans le Flip-Flop T du circuit d'arrêt, en mettant le signal Q = 1. La pression suivante informe le micoroprocesseur pour qu'il envoie au récepteur l'ordre "actif" d'arrêt, qu'il change l'état du Flip-Flop type T, en mettant Q=0.

Le bouton d'arrêt remplit une double fonction d'allumage/arrêt.

Le circuit d'arrêt reçoit comme entrées deux signaux indépendants à partir des contacts normalement ouverts ST1 et ST2 du bouton d'arrêt et le signal KBP, qui indique si le bouton est connecté de façon correcte. Il génère deux signaux de sortie ONVI# et ENFA. Le premier connecte/déconnecte la source d'alimentation et le second autorise/interdit le fonctionnement du circuit stablisateur/générateur de la source d'alimentation.

En outre, il transforme les signaux ST1 et ST2 en ST1# et ST2#, qui sont envoyés au microprocesseur.

Les fonctions essentielles remplies par le circuit d'arrêt sont :
o Assurer que les deux contacts indépendants du bouton d'arrêt ont bien été fermés et ouverts avant de permettre l'allumage de la source d'alimentation du transmetteur.
o Assurer qu'avec la fermeture de l'un quelconque des deux contacts, la séquence d'arrêt est mise en oeuvre. Cette séquence commence en envoyant le signal d'arrêt au microprocesseur et se termine en déconnectant la source d'alimentation de l'émetteur 0,5 s après la fermeture, ne serait-ce que momentanément, d'un ou deux des contacts ST1, ST2.
o Allumer/Éteindre le circuit de l'émetteur, y compris la radio et le microprocesseur.
o Ce circuit d'arrêt est directement alimenté par la batterie extérieure et ses composants sont CMOS de basse tension et à consommation très réduite.
o Un contact de sécurité normalement fermé, KBP, associé au bouton double d'arrêt, assure sa présence. Sa déconnexion provoque l'arrêt immédiat de l'émetteur de télécommande.

Pour mieux comprendre l'objet de la présente invention, on représente sur les plans une forme préférentielle de réalisation pratique, susceptible de changements accessoires qui n'en dénaturent pas le fondement.

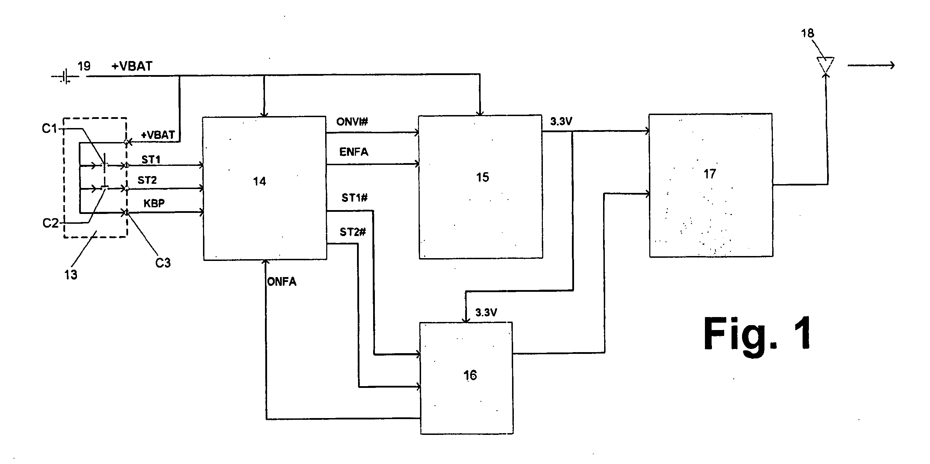

La figure 1 est un diagramme de blocs d'une réalisation pratique d'un émetteur conformément à l'invention.

La figure 2 est un diagramme de blocs d'une réalisation pratique du circuit d'arrêt (14) de la figure 1.

On décrit ci-dessous un exemple de réalisation pratique, non limitative, de la présente invention.

Le signal ONVI#, est généré par le bloc du circuit d'arrêt (14) s'il est égal à 0 ; il fait conduire un transistor MOSFET en connectant la tension de batterie +VBAT avec l'entrée du stabilisateur générateur de + 3,3V dans la source d'alimentation (15). Si ONVI# = 1, il déconnecte la source d'alimentation (15).

Le signal ENFA est généré par le bloc d'arrêt 0; si ENFA = 1, il autorise le fonctionnement du stabilisateur générateur de 3,3V. S'il est égal à 0, il le bloque.

Le signal ONFA est généré par la CPU (16) immédiatement après son allumage, après avoir fait son autodiagnostic, comme information pour le circuit d'arrêt (14) constatant qu'aucun problème opérationnel n'a été détecté.

Les signaux ST1# et ST2# correspondent aux signaux du bouton d'arrêt (13) refusés. Ils sont conduits à la CPU (16) pour que celle-ci donne l'ordre d'arrêt actif, qui sera envoyé, en situation normale, par la radio (17) à l'antenne (18).

Le signal KBP est égal à 1, si l'ensemble bouton d'arrêt (13) est correctement connecté au circuit. Il est égal à 0, si l'ensemble a été déconnecté, démarrant sans contact avec VBAT. S'il est égal à 1, l'état du signal ONVI# sera déterminé par l'état ON/OFF du flip-flop type T. Si 0, ONVI# est forcé à sa valeur 1, qui détermine la coupure de courant dans la Source d'Alimentation (15) et, par conséquent, l'arrêt immédiat de l'émetteur.

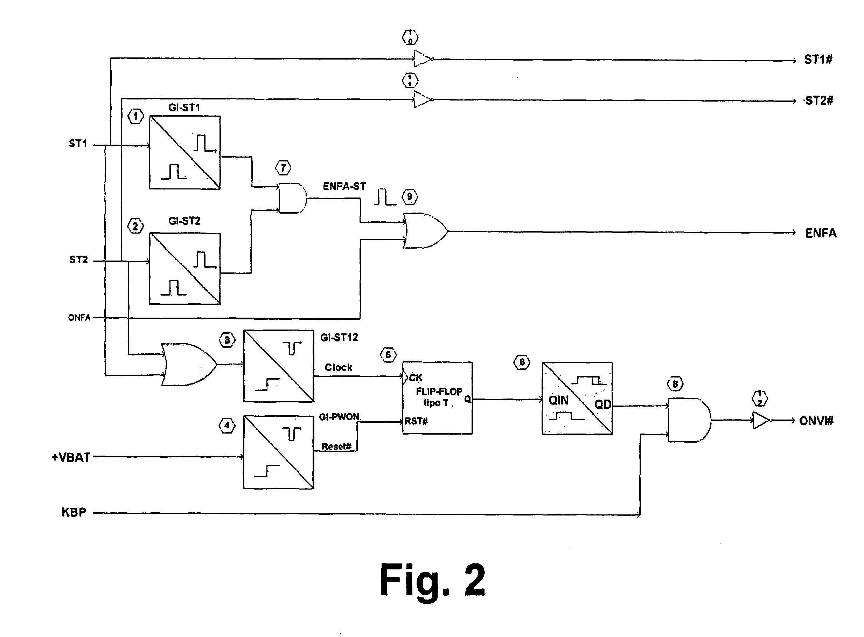

Le "diagramme de blocs circuit d'arrêt" (14) représente les circuits internes du circuit d'arrêt (14) et explique les mécanismes utilisés pour obtenir le niveau de sécurité souhaité -voir figure 2-.

Les blocs qui composent le "diagramme de blocs circuit d'arrêt" sont :
(1) GI-ST1 Générateur d'une impulsion affirmée, avec le flanc descendant du signal d'entrée ST1.
(2) GI-ST2 Générateur d'une impulsions affirmée, avec le flanc descendant du signal d'entrée ST2.
(3) GI-ST12 Générateur d'une impulsion refusée, avec le flanc montant du signal d'entrée "ST1 OR ST2".
(4) GI-PWON Générateur d'une impulsion refusée, avec le flanc montant du signal d'entrée +VBAT.
(5) FLIP-FLOP Type T. Sa sortie Q se met à zéro par pulsation à son entrée RST# et change d'état, de 0 à 1 ou de 1 à 0, chaque fois qu'un flanc positif (de 0 à 1) est appliqué à son entrée CK.
(6) RETARD d'extinction. Il propage, de façon immédiate, le signal présent à son entrée QIN jusquà sa sortie QD, lorsque son entrée présente un changement de 0 à 1. Il propage avec un retard type de 0,5 s le signal présent à son entrée QIN jusqu'à sa sortie QD, lorsque son entrée présente un changement de 1 à 0.
(7) et (8) Portes logiques AND.
(9) Porte logique OR.
(10), (11), (12) Portes logiques NOT.

### Supervision du circuit d'arrêt à l'allumage.

Pour obtenir la mise en marche de la source d'alimentation (15) de l'émetteur, il faut connecter la tension de batterie +VBAT à l'entrée du stabilisateur de tension dans la source d'alimentation (15). On y parvient si le signal ONVI# = 0. Pour y arriver, il faut que :
o Le bouton d'arrêt (13) soit correctement connecté : KBP = 1
o El flip-flop type T (5) ait été commuté de Q=0 à Q=1; pour cela, il a fallu une pulsation de "clock", qui n'est possible que si un ou les deux contacts (Ci), (C₂) du bouton d'arrêt (13) sont passés de la position ouverte à la position fermée.

Pour que le stabilisateur de tension, qui alimente le microprocesseur et la radio, puisse fonctionner, il faut que le signal ENFA = 1. Pour y parvenir, il faut que :
o Le premier contact (C₁) ST1 se ferme et s'ouvre, ce qui détermine la production d'une impulsion de 1 seconde de large au moyen du circuit GI-ST1
o Le second contact (C₂) ST2 se ferme et s'ouvre, ce qui détermine la production d'une impulsion de 1 seconde de large, au moyen du circuit GI-ST2
o La coïncidence dans le temps des pulsations générées par GI-ST1 et GI-ST2 détermine l'apparition d'une impulsion ENFA-ST de la même durée. Cette pulsation permet d'alimenter le microprocesseur d'une manière temporaire. Si, une fois que le temps de la largeur de l'impulsion s'est écoulé, le microprocesseur n'a pas été capable de mettre, en utilisant ses moyens, le signal ONFA = 1, le circuit émetteur s'éteindra. Cette séquence garantit que le microprocesseur est en bon état pour son allumage.

### Arrêt sûr, une panne étant présente.

S'il y a une panne présente, l'arrêt est obtenu grâce à l'une des méthodes "ordre actif d'arrêt" ou "ordre passif d'arrêt":
o Si le bouton complet est déconnecté, le signal KBP a alors une valeur de 0, ce qui détermine l'extinction de la source d'alimentation et, en conséquence, un "ordre passif d'arrêt".
o Si l'un des contacts (Ci), (C₂) ST1 ou ST2 reste ouvert ou fermé en permanence, en raison d'une panne, au moins l'un d'entre eux conduira l'information au microprocesseur, qui procèdera alors à l'envoi d'un "ordre actif d'arrêt".
o Si le microprocesseur ne reconnaît pas les ordres ST1 et ST2, car étant en panne, ces signaux, en étant activés, changent l'état du flip-flop type T devenant alors Q=0, ce qui détermine qu'en 0,5 s. ONVI# = 1, ce qui implique l'extinction de la source d'alimentation et, en conséquence, un "ordre passif d'arrêt".

### Impossibilité d'allumer l'émetteur avec une panne présente.

S'il y a une panne dans la circuit de STOP, son allumage n'est pas possible, car :
o Si le bouton complet est déconnecté, KBP = 0, cela entraîne ONVI# = 1, ce qui rend impossible l'allumage de la source d'alimentation.
o Si l'un des contacts reste ouvert ou fermé en permanence, la pulsation sur celui-ci pour générer l'ordre d'allumage n'aura aucun effet, car le générateur d'impulsions correspondant, GI-ST1 ou GI-ST2 ne recevra pas le flanc descendant qui détermine la génération de la pulsation de sortie. Par conséquent, la pulsation ENFA-ST n'a pas lieu et le stabilisateur de tension ne se met pas en marche.

Si le microprocesseur ne se met pas en marche ou si son logiciel détecte qu'il y a une quelconque panne qui empêche le bon fonctionnement de l'émetteur, sa sortie ONFA = 1 n'est pas activée. Ce qui fait qu'une fois que la période transitoire d'alimentation, qui fournit ENFA-ST, s'est écoulée, le stabilisateur cesse de fonctionner et l'émetteur s'éteint.

## Revendications

1. Émetteur de télécommande, qui se compose d'un bouton d'arrêt (13), d'une source d'alimentation avec un circuit stabilisateur / générateur (15), d'une radio émettrice (17) et d'une CPU de contrôle (16), dans lequel le bouton d'arrêt (13) se compose de :
a) un premier contact (C₁), normalement ouvert, qui se ferme quand on appuie sur le bouton d'arrêt en demande d'arrêt de la machine télécommandée et qui est à l'origine dun signal ST1,
b) un second contact (C₂), normalement ouvert, qui se ferme quand on appuie sur le bouton d'arrêt en demande d'arrêt de la machine télécommandée, et qui est à l'origine d'un signal ST2,
**caractérisé en ce que** le bouton d'arrêt se compose de
c) un troisième contact (C₃), fermé en permanence, qui est à l'origine d'un signal KBP et dont l'ouverture accidentelle indique l'absence de bouton d'arrêt (13), et qui sera interprété comme une demande d'arrêt de la machine télécommandée;
d) une entrée d'alimentation +VBAT commune aux trois contacts (C₁), (C₂), (C₃).

2. Émetteur de télécommande, selon la revendication antérieure, **caractérisé en ce que** l'entrée d'alimentation avec le signal +VBAT est commune au bouton d'arrêt (13), à la source d'alimentation (15) et à un circuit d'arrêt (14), et **en ce que** :
a) le circuit d'arrêt (14) reçoit les signaux ST1, ST2, KBP du bouton d'arrêt (13) et dispose de moyens pour produire
a₁) un signal ONVI# qui, s'il est égal à 0, fait que l'entrée d'alimentation +VBAT se connecte à l'entrée du circuit stabilisateur / générateur et si ONVI# = 1, se déconnecte en considérant que le signal KBP vaut 1, si l'ensemble bouton d'arrêt (13) est correctement connecté à l'entrée d'alimentation +VBAT et vaut 0, s'il ne l'est pas. S'il est égal à 0, ONVI# est forcé à sa valeur 1, qui détermine la coupure de courant dans la source d'alimentation (15) et, par conséquent, l'extinction immédiate de l'émetteur.
a₂) un signal ENFA, qui, si ENFA = 1, autorise le fonctionnement du stabilisateur générateur et, si ENFA = 0, le bloque, et **en ce que**
b) la CPU génère un signal ONFA, immédiatement après son allumage, après avoir fait son auto-diagnostic, comme information pour le circuit d'arrêt (14) qui n'a détecté aucun problème opérationnel, et **en ce que**
c) les signaux ST1# et ST2# qui correspondent aux signaux du bouton d'arrêt (13) refusés, sont envoyés à la CPU (16) pour que celle-ci donne l'ordre d'arrêt actif, qui sera envoyé, en situation normale, par la radio (17).

3. Émetteur de télécommande, selon la revendication 2, **caractérisé en ce que** le circuit d'arrêt (14) se compose de :
a) un bloc (1) GI-ST1, générateur d'une impulsion affirmée, avec le flanc descendant du signal d'entrée ST1, et un bloc (2) GI-ST2, générateur d'une impulsion affirmée, avec le flanc descendant du signal d'entrée ST2, dont les signaux de sortie sont envoyés à une porte logique AND (7) dont la sortie est envoyée à une porte logique OR (9), qui reçoit également comme entrée le signal ONTA, ENFA étant son signal de sortie ;
b) un bloc (3) GI-ST12 générateur d'une impulsion refusée, avec le flanc montant du signal d'entrée ST1 OR ST2 et un bloc (4) GI-PWON générateur d'une impulsion refusée, avec le flanc montant du signal d'entrée +VBAT, dont les signaux de sortie sont envoyés aux entrées respectives CK et RST de
c) un FLIP-FLOP type T (5) dont la sortie Q est remise à zéro par pulsation à son entrée RST# et qui change d'état, de 0 à 1 ou de 1 à 0, chaque fois que le flanc positif (de 0 à 1) est appliqué à son entrée CK, en envoyant sa sortie Q à
d) un bloc de retard de l'extinction (6) qui propage, de façon immédiate, le signal présent à son entrée QIN jusqu'a sa sortie QD, lorsque son entrée présente un changement de 0 à 1, et qui propage avec un retard le signal présent à son entrée QIN jusqu'à sa sortie QD, lorsque son entrée présente un changement de 1 à 0, en envoyant sa sortie QD à
e) une porte logique AND (8), qui reçoit également comme entrée le signal KBP, et dont la sortie refusée constitue le signal ONVI#.

## Claims

1. Remote control emitter, consisting of a stop button (13), of a power supply (15) with a stabilizing/generating circuit, of an emitting radio (17) and of a control CPU (16), wherein the stop button (13) consists of:
a) a typically open first contact (C₁), which is closed when the stop button is pressed so that the remotely controlled machine stops and which generates a signal ST1,
b) a typically open second contact (C₂), which is closed when the stop button is pressed so that the remotely controlled machine stops and which generates a signal ST2,
c) a permanently closed third contact (C₃), which generates a signal KBP and the accidental opening of which indicates the absence of a stop button (13) and it will be interpreted as a request to stop the remotely controlled machine;
d) a power input +VBAT common to the three contacts (C₁), (C₂), (C₃).

2. Remote control emitter according to the previous claim, **characterized in that** the power input with the +VBAT signal is common to the stop button (13), to the power supply (15) and to a stop circuit (14), and **in that**:
a) the stop circuit (14) receives the signals ST1, ST2, KBP from the stop button (13) and has means for producing
a₁) a signal ONVI# which, if equal to 0, makes the power input +VBAT connect to the input of the stabilizing/generating circuit and, if ONVI# = 1, it is disconnected considering that signal KBP equals 1, if the stop button (13) assembly is correctly connected to the power input +VBAT, and equals 0 if it is not. If it is equal to 0, ONVI# is forced to its value 1, which determines the current cutoff in the power supply (15) and, accordingly, the immediate switching off of the emitter.
a₂) a signal ENFA which, if ENFA = 1, allows the operation of the stabilizer/generator, and if ENFA = 0, blocks it, and **in that**
b) the CPU generates a signal ONFA, immediately after it is switched on, after having performed its self-diagnosis, as information for the stop circuit (14) that it has not detected any operating problem, and **in that**
c) signals ST1# and ST2#, which correspond to the rejected signals of the stop button (13), are sent to the CPU (16) so that the latter gives the active stop order, which will be sent by the radio (17) in normal conditions.

3. Remote control emitter according to claim 2, **characterized in that** the stop circuit (14) consists of:
a) a GI-ST1 block (1), generator of an affirmed pulse, with the falling edge of the input signal ST1, and a GI-ST2 block (2), generator of an affirmed pulse, with the falling edge of the input signal ST2, the output signals of which are sent to an AND logic gate (7), the output of which is sent to an OR logic gate (9), which also receives as input the signal ONTA, ENFA being the output signal thereof;
b) a GI-ST12 block (3), generator of a rejected pulse, with the rising edge of the input signal ST1 or ST2 and a GI-PWON block (4), generator of a rejected pulse, with the rising edge of the input signal +VBAT, the output signals of which are sent to the respective CK and RST inputs of
c) a T-type FLIP-FLOP (5), the output Q of which is set to zero by pulsing at its input RST# and which changes state from 0 to 1 or from 1 to 0 every time the positive edge (from 0 to 1) is applied to its input CK, sending its output Q to
d) a block (6) for delaying the switching off which immediately propagates the signal present at its input QIN to its output QD, when its input presents a change of 0 to 1, and which propagates the signal present at its input QIN to its output QD with a delay, when its input presents a change of 1 to 0, sending its output QD to
e) an AND logic gate (8), which also receives as input the signal KBP, and the rejected output of which forms the signal ONVI#.

## Patentansprüche

1. Fernsteuerungsemitter, umfassend einen Halt-Knopf (13), eine Versorgungsquelle mit einer Stabilisator-/Generatorschaltung (15), eine Funksendeeinrichtung (17) und eine Steuerungs-CPU (16), wobei der Halt-Knopf (13) umfasst:
a) einen ersten normalerweise offenen Kontakt (C1), der schließt, wenn man auf den Halt-Knopf drückt, um die ferngesteuerte Maschine anzuhalten, und von dem ein Signal ST1 stammt,
b) einen zweiten normalerweise offenen Kontakt (C2), der schließt, wenn man auf den Halt-Knopf drückt, um die ferngesteuerte Maschine anzuhalten, und von dem ein Signal ST2 stammt,
**dadurch gekennzeichnet, dass** der Halt-Knopf umfasst:
c) einen permanent geschlossenen Kontakt (C3), von dem ein Signal KBP stammt und dessen zufällige bzw. störungsbedingte Öffnung die Absenz des Halt-Knopf (13) anzeigt und das als ein Befehl zum Anhalten der ferngesteuerten Maschine interpretiert wird;
d) einen gemeinsamen Versorgungseingang +VBAT für die drei Kontakte (C1), (C2), (C3).

2. Fernsteuerungsemitter nach dem vorhergehenden Anspruch, **dadurch gekennzeichnet, dass** der Versorgungseingang den Halt-Knopf (13), die Versorgungsquelle (15) und eine Aus-Schaltung (14) mit demselben Signal +VBAT speist, und dadurch, dass:
a) die Aus-Schaltung (14) die Signale ST1, ST2, KBP des Halt-Knopfs (13) erhält und Einrichtungen umfasst, um zu erzeugen:
a₁) ein Signal ONVI#, das, wenn es gleich 0 ist, bewirkt, dass der Versorgungseingang +VBAT sich mit der Stabilisator-/Generatorschaltung verbindet, und, wenn ONVI# = 1, sich trennt in der Annahme, dass das Signal KBP = 1 ist, wenn die Halt-Knopf-Einheit (13) korrekt mit dem Versorgungseingang +VBAT verbunden ist, und 0 ist, wenn sie es nicht ist. Wenn es gleich 0 ist , wird ONVI# zu seinem Wert 1 gezwungen, was die Stromabschaltung in der Versorgungsquelle (15) bewirkt und folglich das sofortige Abschalten des Emitters.
a₂) ein Signal ENFA, das, wenn ENFA = 1, den Betrieb der Stabilisator-/Generatorschaltung zulässt, und, wenn ENFA = 0, sie blockiert, und dadurch, dass
b) die CPU ein Signal ONFA erzeugt - unmittelbar nach dem Einschalten, nachdem sie ihre Autodiagnostik durchgeführt hat - als Information für die Aus-Schaltung (14), die kein Betriebsproblem detektiert hat, und dadurch, dass
c) die Signale ST1# und ST2#, die den Verweigerungssignalen des Halt-Knopfs (13) entsprechen, in die CPU (16) eingespeist werden, damit diese den aktiven Halt-Befehl liefert, der, in Normalsituation, durch die Funkeinrichtung (17) gesendet wird.

3. Fernsteuerungsemitter nach Anspruch 2, **dadurch gekennzeichnet, dass** die Halt-Schaltung (14) umfasst:
a) einen Block (1) GI-STI, Generator eines Bestätigungsimpulses, mit der Abstiegsflanke des Eingangssignals ST1, und einen Block (2) GI-ST2, Generator eines Bestätigungsimpulses, mit der Abstiegsflanke des Eingangssignals ST2, deren Ausgangssignale in ein UND-Logikglied (7) eingespeist werden, dessen Ausgang in ein ODER-Logikglied (9) eingespeist wird, das als Eingang ebenfalls das Signal ONTA erhält, wobei ENFA sein Ausgangssignal ist;
b) einen Block (3) GI-ST12, Generator eines Verweigerungsimpulses, mit der Anstiegsflanke des Eingangssignals ST1 oder ST2, und einen Block (4) GI-PWON, Generator eines Verweigerungsimpulses, mit der Anstiegsflanke des Eingangssignals +VBAT, deren Ausgangssignale jeweils eingespeist werden in die Eingänge CK und RST von
c) einem Flip-Flop des Typs T (5), dessen Ausgang Q mittels Pulsation bzw. Kreisfrequenz an seinem Eingang RST# auf Null gestellt wird und der jedes Mal seinen Zustand von 0 nach 1 oder von 1 nach 0 verändert, wenn die positive Flanke (von 0 nach 1) an seinem Eingang CK anliegt, wobei sein Ausgang Q eingespeist wird in
d) einen Abschalt-Verzögerungsblock (6), der das an seinem Eingang QIN anliegende Signal sofort zu seinem Ausgang QD weiterleitet, wenn sein Eingang einen Wechsel von 0 nach 1 aufweist, und der das an seinem Eingang QIN anliegende Signal mit einer Verzögerung zu einem Ausgang QD weiterleitet, wenn sein Eingang einen Wechsel von 1 nach 0 aufweist, wobei sein Ausgang QD eingespeist wird in
e) ein UND-Logikglied (8), das als Eingang ebenfalls das Signal KBP erhält und dessen Verweigerungsausgang das Signal ONVI# liefert.
